(19) 

Europäisches
Patentamt
European
Patent Office
Office européen
des brevets

(11) **EP 4 601 371 A1**

(12) **EUROPEAN PATENT APPLICATION**
published in accordance with Art. 153(4) EPC

(43) Date of publication:
**13.08.2025 Bulletin 2025/33**

(21) Application number: **23888991.9**

(22) Date of filing: **26.10.2023**

(51) International Patent Classification (IPC):
*H04W 68/02* (2009.01)    *H04W 8/02* (2009.01)
*H04W 60/04* (2009.01)    *G06N 20/00* (2019.01)

(52) Cooperative Patent Classification (CPC):
**G06N 20/00; H04W 8/02; H04W 60/04; H04W 68/02**

(86) International application number:
**PCT/KR2023/016744**

(87) International publication number:
**WO 2024/101729 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.11.2022 KR 20220147255
21.11.2022 KR 20220156597**

(71) Applicant: **Samsung Electronics Co., Ltd.
Suwon-si, Gyeonggi-do 16677 (KR)**

(72) Inventors:
• **KIM, Daejin
Suwon-si Gyeonggi-do 16677 (KR)**
• **KIM, Suyoung
Suwon-si Gyeonggi-do 16677 (KR)**
• **KWAK, Myungchun
Suwon-si Gyeonggi-do 16677 (KR)**
• **NAM, Dongho
Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54) **METHOD AND APPARATUS FOR PAGING PROCEDURE IN WIRELESS COMMUNICATION SYSTEM**

(57) The present disclosure relates to a 5th generation (5G) or pre-5G communication system for supporting data transmission rates higher than that of a 4th generation (4G) communication system such as long-term evolution (LTE). According to various embodiments of the present disclosure, a method for a paging procedure in a wireless communication system comprises steps in which: a network node receives, from a plurality of terminals registered in an AMF entity, mobility data related to the mobile frequency of the plurality of terminals; a first candidate paging area is derived on the basis of a learning algorithm trained to derive a candidate paging area on the basis of the mobility data, and mobility data about a first period from among the mobility data; and reliability of the derived first candidate paging area is determined using test data about the first period.

FIG.12

# Description

[Technical Field]

The disclosure relates to a wireless communication system and, more particularly, to a method and an apparatus for reducing paging load.

[Background Art]

To meet the demand for wireless data traffic having increased since deployment of 4th generation (4G) communication systems, efforts have been made to develop an improved 5th generation (5G) or pre-5G communication system. Therefore, the 5G or pre-5G communication system is also called a "beyond 4G network" communication system or a "post long term evolution (post LTE)" system.

The 5G communication system is considered to be implemented in ultrahigh frequency bands (e.g., 60GHz bands) so as to accomplish higher data rates. To decrease propagation loss of the radio waves and increase the transmission distance in the ultrahigh frequency bands, beamforming, massive multiple-input multiple-output (massive MIMO), full dimensional MIMO (FD-MIMO), array antenna, analog beam forming, large scale antenna techniques are discussed in 5G communication systems.

In addition, in 5G communication systems, development for system network improvement is under way based on advanced small cells, cloud radio access networks (cloud RANs), ultra-dense networks, device-to-device (D2D) communication, wireless backhaul, moving network, cooperative communication, coordinated multi-points (CoMP), receptionend interference cancellation and the like.

In the 5G system, hybrid FSK and QAM modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have also been developed. With the advance of wireless communication systems as described above, various services can be provided, and accordingly there is a need for schemes to smoothly provide these services. More particularly, there is a need for a technology to support services newly requested in a wireless communication system.

Recently, with the development of communication systems, methods for reducing the number of paging messages and increasing a paging success rate in a paging procedure are being sought. More particularly, research is being conducted continuously to improve a paging procedure based on a larger amount of data by applying a machine learning algorithm. In addition, research is also being conducted in parallel with efforts to improve the aforementioned machine learning algorithm based on artificial intelligence (AI).

[Disclosure of Invention]

[Technical Problem]

A machine learning algorithm based on mobility data of a terminal is proposed. Via the proposed algorithm, a paging area, which increases a paging success rate while minimizing the number of S1AP/NGAP paging messages that consume a significant portion of network resources, may be obtained. In addition, an aspect of the disclosure is to provide an apparatus and a method for reducing paging load by deriving an optimal paging area.

In addition, an aspect of the disclosure is to provide a method and an apparatus for AI model-based performance evaluation for deriving an optimal paging area.

[Solution to Problem]

In accordance with an aspect of the disclosure, a method for identifying a base station to which a network node is to transmit a paging message in a wireless communication system is provided. The method includes receiving, from multiple terminals registered with an access and mobility management function (AMF) entity, mobility data related to movement frequencies of the multiple terminals, based on a learning algorithm trained to derive a candidate paging area based on the mobility data, and mobility data for a first period among the mobility data, deriving a first candidate paging area, determining reliability of the derived first candidate paging area based on test data for the first period, based on the reliability, identifying at least one base station to receive a paging message transmitted from the network node, and transmitting, to the at least one base station, the paging message, wherein the test data for the first period comprises mobility data related to the multiple terminals after the first period.

In accordance with another aspect of the disclosure, a network node is provided. The network node includes a transceiver; a processor coupled with the transceiver; and memory storing instructions that, when executed by the processor, cause the first node device to: receive, from multiple terminals registered with an access and mobility management function (AMF) entity, mobility data related to movement frequencies of the multiple terminals, based on a learning algorithm trained to derive a candidate paging area based on the mobility data, and mobility data for a first period among the mobility data, derive a first candidate paging area, determine reliability of the derived first candidate paging area based on test data for the first period, based on the reliability, identify at least one base station to receive a paging message transmitted from the network node, and transmit, to the at least one base station, the paging message, wherein the test data for the first period includes mobility data related to the multiple terminals after the first period.

[Advantageous Effects of Invention]

A method and an apparatus according to various embodiments of the disclosure reduces paging load by sequentially attempting to page base stations to which a terminal is highly likely to move.

Advantageous effects obtainable from the disclosure may not be limited to the above-mentioned effects, and other effects which are not mentioned may be clearly understood from the following descriptions by those skilled in the art to which the disclosure pertains.

[Brief Description of Drawings]

FIG. 1 illustrates a structure of a wireless communication system according to various embodiments of the disclosure.

FIG. 2 illustrates a structure of a UE in a wireless communication system according to various embodiments of the disclosure.

FIG. 3 illustrates a structure of a base station in a wireless communication system according to various embodiments of the disclosure.

FIG. 4 illustrates a structure of an access and mobility management function (AMF) according to various embodiments of the disclosure.

FIG. 5 illustrates mobility of a UE between base stations according to various embodiments of the disclosure;

FIG. 6 illustrates a transition probability matrix according to various embodiments of the disclosure;

FIG. 7 illustrates a smart paging algorithm according to various embodiments of the disclosure;

FIG. 8 illustrates candidate tracking areas (TAs) via machine learning according to various embodiments of the disclosure;

FIG. 9 illustrates performance evaluation results according to various embodiments of the disclosure;

FIG. 10 illustrates a configuration of a network entity for smart paging according to various embodiments of the disclosure;

FIG. 11 illustrates an operation sequence of an AMF for smart paging according to various embodiments of the disclosure; and

FIG. 12 illustrates an artificial intelligence (AI)-based performance evaluation sequence according to various embodiments of the disclosure.

[Mode for the Invention]

Hereinafter, certain example embodiments will be described in detail with reference to the accompanying drawings.

In describing the embodiments of the disclosure, descriptions related to technical contents well-known in the art and not associated directly with the disclosure will be omitted. Such an omission of unnecessary descriptions is intended to prevent or reduce obscuring of the main idea of the disclosure and more clearly transfer the main idea.

For the same reason, in the accompanying drawings, some elements may be exaggerated, omitted, or schematically illustrated. Further, the size of each element does not completely reflect the actual size. In the drawings, identical or corresponding elements are provided with identical reference numerals.

The advantages and features of the disclosure and ways to achieve them will be apparent by making reference to embodiments as described below in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements. In describing the disclosure, a detailed description of known functions or configurations incorporated herein will be omitted when it is determined that the description may make the subject matter of the disclosure unnecessarily unclear. The terms which will be described below are terms defined based on the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit comprising circuitry, a base station controller comprising circuitry, and a node on a network. A terminal may include a user equipment (UE), a mobile station (MS), a cellular phone, a smartphone, a computer, or a multimedia system capable of performing communication functions. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the example embodiments may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, or other similar services. In addition, based on determinations by those skilled in the art, the example embodiments may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operations to be performed on the computer or other programmable apparatus to produce a computer implemented process such that the instructions that execute on the computer or other programmable apparatus provide operations for implementing the functions specified in the flowchart block or blocks.

Furthermore, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the "unit" refers to a software element or a hardware element, such as a field programmable gate array (FPGA) or an application specific integrated circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card. Furthermore, the "unit" in the embodiments may include one or more processors.

In the following description, some of terms and names defined in the 3rd generation partnership project long term evolution (3GPP LTE)-based communication standards (e.g., standards for 5G, NR, LTE, or similar systems) may be used for the sake of descriptive convenience. However, the disclosure is not limited by these terms and names, and may be applied in the same way to systems that conform other standards.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

The disclosure relates to a machine learning method and apparatus for reducing paging load in a wireless communication system. Specifically, the disclosure describes a technique in which, in a wireless communication system, a network node (e.g., a mobility management entity (MME) or an access and mobility management function (AMF)) that manages mobility of a UE transmits paging messages sequentially to base stations to which the UE is highly likely to move, thereby reducing paging load. Hereinafter, for convenience of description, a base station to which a UE is expected to move, i.e., a base station that transmits a paging message, is referred to and described as a paging base station.

Advantageous effects obtainable from the disclosure may not be limited to the above-mentioned effects, and other effects which are not mentioned may be clearly understood from the following descriptions by those skilled in the art to which the disclosure pertains.

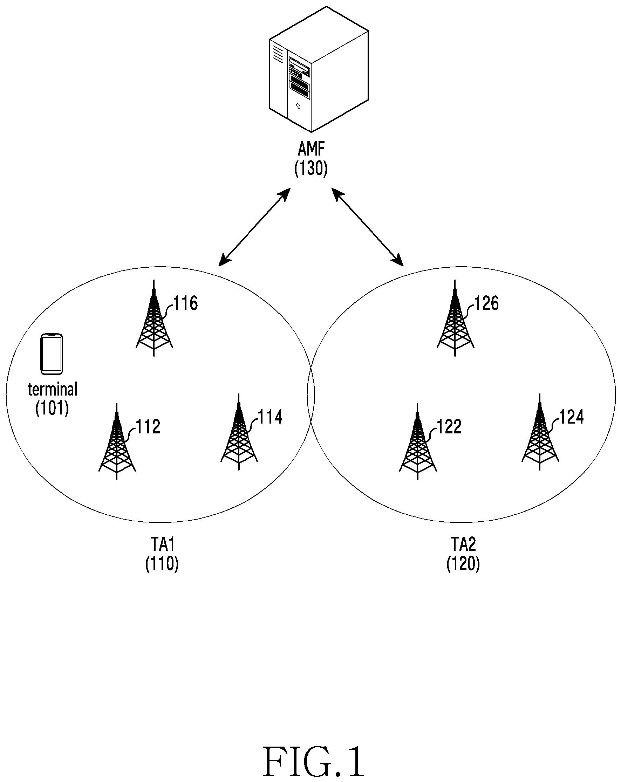

FIG. 1 illustrates an example of a wireless communication system according to various embodiments of the disclosure. FIG. 1 illustrates an AMF 130, a base station 112, a base station 114, a base station 116, a base station 122, a base station 124, a base station 126, and a UE 140, as some of nodes using a wireless channel in the wireless communication system.

Referring to FIG. 1, the UE 140 is a device used by a user and may perform communication via an access network, i.e., a wireless channel established with respect to the base station 112, 114, 116, 122, 124, or 126. In some cases, the UE 140 may be operated without user involvement. For example, at least one UE 140 is a device that performs machine type communication (MTC) and may not be carried by a user. The UE 140 may be referred to as "terminal," "user equipment (UE)," "mobile station," "subscriber station," "customer premises equipment (CPE)," "remote terminal," "wireless terminal," "vehicle terminal," "user device," or other terms having equivalent technical meanings.

The base station 112, 114, 116, 122, 124, or 126 corresponds to a network infrastructure that provides wireless access. The base station 112, 114, 116, 122, 124, or 126 has coverage defined as a certain geographic area based on a distance in which a signal may be transmitted. Hereinafter, the term "coverage" used may refer to a service coverage area provided by the base station 112, 114, 116, 122, 124, or 126. The base station 112, 114, 116, 122, 124, or 126 may cover one cell or cover multiple cells. Here, multiple cells may be distinguished based on supported frequencies and sector areas that are covered.

The base station 112, 114, 116, 122, 124, or 126 may be referred to as, in addition to base station, "access point (AP)," "eNodeB (eNB)," "5th generation node (5G node)," "5G NodeB," "next generation node B (gNB)," "wireless point," "transmission/reception point (TRP)," "distributed unit (DU)," "radio unit (RU)," "remote radio head (RRH)," or other terms having equivalent technical meanings. According to various embodiments of the disclosure, the base station 112, 114, 116, 122, 124, or 126 may be connected to one or more TRPs. The base station 112, 114, 116, 122, 124, or 126 may, via one or more TRPs, transmit a downlink signal to an electronic device 101 or receive an uplink signal.

The AMF 130 may provide a function for managing access and mobility of the UE, and one UE may be connected to one AMF by default. Specifically, the AMF 130 may perform at least one function among signaling between core network nodes for mobility between 3rd generation partnership project (3GPP) access networks, a CP interface (N2 interface) between radio access networks (e.g., 5G radio access networks (RANs)), NAS signaling with the UE 101, identification of an SMF, and transferring and providing a session management message between the UE and the SMF. Some or all of the functions of the AMF may be supported within a single instance of one AMF.

The UE 101 may transmit or receive a message to or from the AMF 130 via NAS signaling. NAS signaling may indicate a functional layer for exchanging traffic messages and signaling between a UE and a core network in a 5G system (5GS) protocol stack. In a NAS layer, the UE 101 may transmit a message to the AMF or receive a message from the AMF via the base station. In this case, the base station may transfer a message to the UE 101 or the AMF without interpreting the message. Mobility of the UE 101 may be supported via NAS signaling.

Hereinafter, although described as the AMF, another wireless communication system environment may be considered in addition to the NR environment. According to an embodiment of the disclosure, various embodiments of the disclosure may be applied to a wireless environment where a long-term evolution (LTE) communication system is used. In this case, as an entity for mobility management, a mobility management entity (MME) may be used instead of the AMF. For example, AMF operations of the disclosure described below may be performed by the MME.

The communication system according to various embodiments of the disclosure may include a standalone (SA) deployment structure for performing communication only with 5G communication entities, or may include a non-standalone (NSA) deployment structure using 4G entities and 5G entities for 5G communication. In addition, according to an embodiment of the disclosure, the communication system of the disclosure may include a network deployment structure including 4G entities. Hereinafter, the disclosure describes embodiments assuming a 5G communication network. However, if the same concept is also applicable to other systems within a scope that can be understood by a person having ordinary technical skills, other systems may be applied.

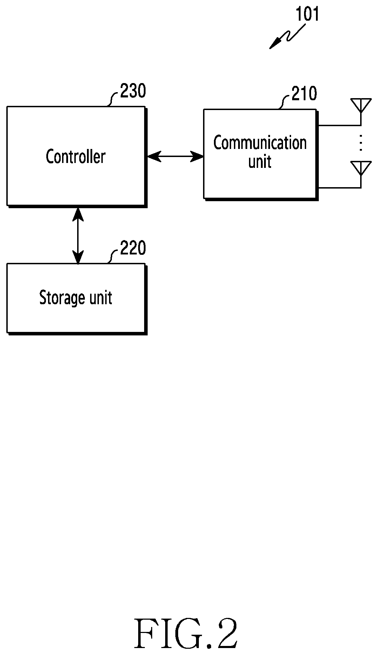

FIG. 2 illustrates a structure of a UE according to various embodiments of the disclosure. The structure illustrated in FIG. 2 may be understood as a structure of the UE 101 in FIG 1. As used herein, the term "... unit", "-er", or the like refers to a unit configured to process at least one function or operation, and may be implemented as hardware, software, or a combination of hardware and software.

Referring to FIG. 2, the UE may include a communication unit 210, a storage unit 220, and a controller 230.

The communication unit 210 performs functions for transmitting/receiving signals through radio channels. For example, the wireless communication unit 210 may performs functions of conversion between baseband signals and bitstrings according to the physical layer specifications of the system. For example, during data transmission, the communication unit 210 may encode and modulate a transmitted bitstring to generate complex symbols. In addition, during data reception, the communication unit 210 may demodulate and decode a baseband signal to restore a received bitstring. In addition, the wireless communication unit 210 up-converts a baseband signal to an RF band signal, transmits the same through an antenna, and down-converts an RF band signal received through the antenna to a baseband signal. To this end, the wireless communication unit 210 may include a transmission filter, a reception filter, an amplifier, a mixer, an oscillator, a digital to analog converter (DAC), an analog to digital converter (ADC), and the like.

In addition, the communication unit 210 may include multiple transmission/reception paths. Furthermore, the communication unit 210 may include an antenna unit. The communication unit 210 may include at least one antenna array configured by multiple antenna elements. In terms of hardware, the communication unit 210 may include a digital circuit and an analog circuit (e.g., a radio frequency integrated circuit (RFIC)). The digital circuit and the analog circuit may be implemented as a single package. In addition, the communication unit 210 may include multiple RF chains. The communication unit 210 may perform beamforming. In order to assign directivity based on configurations of the controller 230 to a signal to be transmitted/received, the communication unit 210 may apply a beamforming weight to the signal.

In addition, the communication unit 210 may transmit/receive signals. To this end, the communication unit 210 may include at least one transceiver. In addition, the communication unit 210 may receive a downlink signal. The downlink signal may include a synchronization signal, a reference signal, a configuration message, control information, downlink data, etc. In addition, the communication unit 210 may transmit an uplink signal. The uplink signal may include a random access-related signal (e.g., a random-access preamble (RAP) or message 3 (Msg3)), a reference signal, a power headroom report (PHR), etc.

In addition, the communication unit 210 may include different communication modules for processing signals in different frequency bands. Furthermore, the communication unit 210 may include multiple communication modules in order to support multiple different radio access technologies. For example, the different radio access technologies may include Bluetooth low energy (BLE), wireless fidelity (Wi-Fi), Wi-Fi gigabyte (WiGig), a cellular network (e.g., long-term evolution (LTE)), new radio (NR), or the like. In addition, the different frequency bands may include super high frequency (SHF) bands (e.g., 2.5GHz or 5GHz bands), millimeter wave (mmWave) bands (e.g., 38GHz or 60GHz bands), etc. In addition, the communication unit 210 may use a radio-access technology of the same scheme on different frequency bands (e.g., an unlicensed band for licensed assisted access (LAA) and a citizen broadband radio service (CBRS) (e.g., 3.5 GHz)).

The communication unit 210 may transmit and receive a signal as described above. Accordingly, all or part of the communication unit 210 may be referred to as a "transmitter", a "receiver", or a "transceiver". In addition, as used in the following description, the meaning of "transmission and reception performed through a radio channel" may include the meaning that the above-described processing is performed by the communication unit %n.

The storage unit 220 may store data, such as a basic program, an application program, and configuration information for operations of the UE 101. The storage unit 220 may be configured by volatile memory, nonvolatile memory, or a combination of volatile memory and nonvolatile memory. In addition, the storage unit 220 may provide the stored data at the request of the controller 230.

The controller 230 may control the overall operation of the UE. For example, the controller 230 may transmit and receive a signal through the communication unit 210. In addition, the controller 230 may record data in the storage unit 220 and reads the data from the storage unit 220. In addition, the controller 230 may perform functions of protocol stacks required by communication specifications. To this end, the controller 230 may include at least one processor. The controller 230 may include at least one processor or micro-processor, or may be a part of a processor. In addition, a part of the communication unit 210 and the controller 230 may be referred to as a CP. The controller 230 may include various modules for performing communication. According to various embodiments of the disclosure, the controller 230 may control the UE to perform operations according to various embodiments as described below.

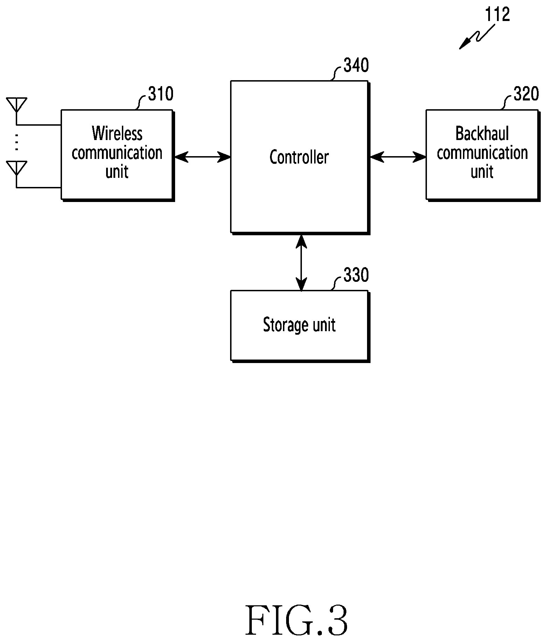

FIG. 3 illustrates a structure of a base station according to various embodiments of the disclosure. The structure illustrated in FIG. 3 may be understood as a structure of the base station 112 in FIG. 1. As used herein, the term "... unit", "-er", or the like refers to a unit configured to process at least one function or operation, and may be implemented as hardware, software, or a combination of hardware and software.

Referring to FIG. 3, the base station 112 may include a communication unit 310, a backhaul communication unit 320, a storage unit 330, and a controller 340.

The communication unit 310 performs functions for transmitting/receiving signals through radio channels. Accordingly, the communication unit 310 may be referred to as "wireless communication unit". For example, the wireless communication unit 310 may performs functions of conversion between baseband signals and bitstrings according to the physical layer specifications of the system. For example, during data transmission, the communication unit 310 may encode and modulate a transmitted bitstring to generate complex symbols. In addition, during data reception, the communication unit 310 may demodulate and decode a baseband signal to restore a received bitstring. In addition, the wireless communication unit 310 up-converts a baseband signal to an RF band signal, transmits the same through an antenna, and down-converts an RF band signal received through the antenna to a baseband signal. To this end, the wireless communication unit 310 may include a transmission filter, a reception filter, an amplifier, a mixer, an oscillator, a digital to analog converter (DAC), an analog to digital converter (ADC), or the like.

In addition, the communication unit 310 may include multiple transmission/reception paths. Moreover, the communication unit 310 may include at least one antenna array configured by multiple antenna elements. In terms of hardware, the wireless communication unit 310 may include a digital unit and an analog unit, and the analog unit may include multiple sub-units according to operation power, frequencies, etc.

The communication unit 310 may transmit/receive signals. To this end, the communication unit 310 may include at least one transceiver. For example, the communication unit 310 may transmit a synchronization signal, a reference signal, system information, a configuration message, control information, data, etc. In addition, the communication unit 310 may perform beamforming.

The communication unit 310 may transmit and receive a signal as described above. Accordingly, all or part of the communication unit 310 may be referred to as a "transmitter", a "receiver", or a "transceiver". In addition, as used in the following description, the meaning of "transmission and reception performed through a radio channel" may include the meaning that the above-described processing is performed by the communication unit 310.

The backhaul communication unit 320 provides an interface for performing communication with other nodes in the network. For example, the backhaul communication unit 320 may convert, into a physical signal, a bitstream transmitted from the base station 112 to another node, for example, another access node, another base station, a higher node, a core network, etc., and convert a physical signal received from another node into a bitstream.

The storage unit 330 may store data, such as a basic program, an application program, and configuration information for an operation of the base station 112. The storage unit 330 may include memory. The storage unit 330 may be configured by volatile memory, nonvolatile memory, or a combination of volatile memory and nonvolatile memory. In addition, the storage unit 330 may provide the stored data at the request of the controller 340.

The controller 340 may control the overall operation of the base station 112. For example, the controller 340 may transmit and receive a signal through the wireless communication unit 310 or the backhaul communication unit 320. In addition, the controller 340 may record data in the storage unit 330 and reads the data from the storage unit 330. Furthermore, the controller 340 may perform functions of protocol stacks required by communication specifications. To this end, the controller 340 may include at least one processor.

The structure of the base station 112 illustrated in FIG. 3 is a merely an example of the base station, and examples of the base station for performing various embodiment of the disclosure are not limited to the structure illustrated in FIG. 3. For example, some elements may be added, omitted, or changed according to various embodiments.

In FIG. 3, the base station has been described as a single entity, but the disclosure is not limited thereto. In addition to the integrated deployment, the base station according to various embodiments of the disclosure may be implemented to construct an access network having a distributed deployment. According to an embodiment of the disclosure, the base station may be divided into a central unit (CU) and a digital unit (DU), the CU may be implemented to perform upper layer functions (e.g., packet data convergence protocol (PDCP) and radio resource control (RRC)), and the DU may be implemented to perform lower layer functions (e.g., medium access control (MAC) and physical (PHY)). The DU of the base station may form beam coverage on a radio channel.

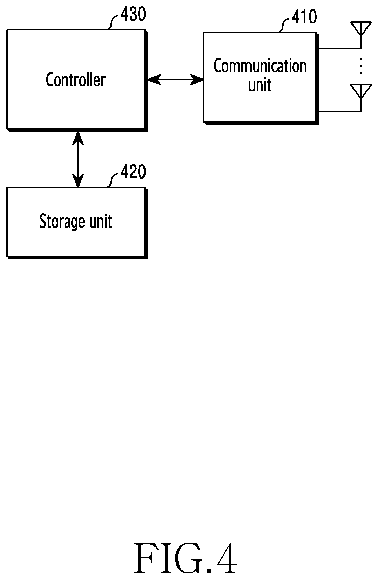

FIG. 4 illustrates a structure of an access and mobility management function (AMF) according to various embodiments of the disclosure. The structure illustrated in FIG. 4 may be understood as a structure of the AMF 130 in FIG. 1. As used herein, the term "... unit", "-er", or the like refers to a unit configured to process at least one function or operation, and may be implemented as hardware, software, or a combination of hardware and software.

Referring to FIG. 4, the AMF may include a communication unit 410, a storage unit 420, and a controller 430.

The communication unit 410 may perform functions for transmitting/receiving signals in a wired communication environment. The communication unit 410 may include a wired interface for a direct connection between devices through a transmission medium (e.g., copper wire or optical fiber). For example, the communication unit 410 may transfer electric signals to another device through a coper wire, or may perform conversion between electric signals and optical signals. The communication unit 410 may transmit/receive signals between network entities forming a core network according to the wired communication interface specifications.

The communication unit 410 performs functions for transmitting/receiving signals through radio channels. For example, the communication unit 410 may performs functions of conversion between baseband signals and bitstrings according to the physical layer specifications of the system. For example, during data transmission, the communication unit 410 may encode and modulate a transmitted bitstring to generate complex symbols. In addition, during data reception, the communication unit 410 may demodulate and decode a baseband signal to restore a received bitstring. In addition, the wireless communication unit 410 up-converts a baseband signal to an RF band signal, transmits the same through an antenna, and down-converts an RF band signal received through the antenna to a baseband signal. To this end, the wireless communication unit 410 may include a transmission filter, a reception filter, an amplifier, a mixer, an oscillator, a digital to analog converter (DAC), an analog to digital converter (ADC), etc.

The communication unit 410 may transmit and receive a signal as described above. Accordingly, all or part of the communication unit 410 may be referred to as a "transmitter", a "receiver", or a "transceiver". In addition, as used in the following description, the meaning of "transmission and reception performed through a radio channel" may include the meaning that the above-described processing is performed by the communication unit %n.

The storage unit 420 may store data, such as a basic program, an application program, and configuration information for operations of the network entity. The storage unit 420 may be configured by volatile memory, nonvolatile memory, or a combination of volatile memory and nonvolatile memory. In addition, the storage unit 420 may provide data stored therein at the request of the controller 430.

The controller 430 may control the overall operation of the AMF. For example, the controller 430 may transmit and receive a signal through the communication unit 410. In addition, the controller 430 may record data in the storage unit 420 and reads the data from the storage unit 420. Furthermore, the controller 430 may perform functions of protocol stacks required by communication specifications. According to another implementation, the protocol stack may be included in the communication unit 410. To this end, the controller 430 may include at least one processor.

The AMF may be a network entity that manages mobility of the UE. The AMF may identify a location of the UE in units of tracking areas (TAs), i.e., a set of one or more cells. In a case of a radio resource control (RRC) connected state in which the UE is able to access the AMF, the AMF may identify the location of the UE in units of cells. In a case of an RRC inactive state of the UE introduced in the new radio (NR), the core network recognizes that the core and the UE have been connected, and radio access network (RAN) paging is performed, so that the AMF may also identify the location of the UE. However, if the UE is in an RRC idle state, the AMF identifies only a registered TA and is unable to identify the location of the UE so that the AMF may need to transmit a paging message to connect to the UE.

A conventional paging method (e.g., paging order 3) is described below with reference to FIG. 1. In the description below, it may be assumed that a TAL includes TA1 110 and TA2 120.

The AMF 130 may transmit a first paging message to the base station 112 that the UE 101 is last connected to. If there is no response to the first paging message, the AMF 130 may transmit a second paging message to the base stations 112, 114, and 116 included in TA1 110 to which the base station 112 belongs. If there is no response to the second paging message, the AMF 130 may transmit a third paging message to the base stations 112, 114, 116, 122, 124, and 126 included in the TAL to which the base station 112 belongs. For example, the AMF may sequentially transmit paging messages to a base station (hereinafter, referred to as a reference base station) that has most recently transmitted a paging message, base stations belonging to a TA (hereinafter, referred to as a reference TA) of the reference base station, and base stations belonging to a TAL (hereinafter, referred to as a reference TAL) of the reference TA.

Referring to the conventional paging method described above, there may be two signaling loads in mobility management of the UE, which are used in the core network. A first signaling load may be a tracking area update (TAU) load in which the UE informs about its location to the AMF. For example, if the number of cells included in a TA is small, energy consumption of the UE may be high due to frequent TAU. A second signaling load may be a paging load transmitted by the AMF to the UE. For example, if the number of base stations included in a TA is large, the number of paging messages (e.g., S1 application protocol (S1AP) or NG application protocol (NGAP)) may increase, resulting in large consumption of network resources. In other words, the TAU load and the paging load may be affected by a configuration of the TA, and may be in a trade-off relationship. Therefore, it is necessary to reduce resource waste by reducing the number of unnecessary paging message transmissions within the network.

Hereinafter, the disclosure relates to a method and an apparatus for reducing paging load by acquiring an optimal number of base stations (i.e., paging base stations) for paging message transmission for each stage. If paging attempts by all the paging base stations fail in corresponding stages, the AMF configures paging base stations again in a subsequent stage. In this case, since a range of paging base stations increases as stages progress, a design for which base station is to be configured as a paging base station in a specific stage may be required based on a total number of paging messages.

If a probability that the UE will move from a base station that has been last registered with the AMF to another base station is given, a minimum paging load may be obtained by sequentially attempting to page to base stations to which the UE is highly likely to move. However, since latency may increase as the number of paging attempts increases, a paging order of the disclosure may be limited according to an embodiment. Hereinafter, a paging order is described to be 3 as an example in the disclosure, but the paging order in embodiments of the disclosure are not limited thereto.

According to an embodiment of the disclosure, a network entity may be the AMF. Hereinafter, descriptions are provided for a procedure in which the number of paging messages generated by the AMF 130 is defined as an objective function, and the number of paging messages is minimized based on the objective function.

Hereinafter, an expression method used to describe various embodiments of the disclosure is described in Table 1.

[Table 1]

| Symbol | Meaning |
|---|---|
| $gb_j$ | gNB j |
| $A_j = \{gb_{j_1}, gb_{j_2}, \cdots, gb_{j_{n_j}}\}$ | TA including gNB j, $n_j$ is the number of gNBs included in $A_j$ |

(continued)

| Symbol | Meaning |
|---|---|
| $L_j = U_{l \in [m]} A_{jl}$ | TAL including gNB j, m is the number of TAs included in TAL j |
| h | Paging level |
| $f_j^{[i]}$ | Failure probability at i-th paging level for gNB j |
| $D_j^{[i]}$ | Set of gNBs for i-th paging in gNB j |
| $d_j^{[i]}$ | Number of gNBs for i-th paging in gNB j |
| $c_j^{[i]}$ | Number of i-th paging attempts in gNB j |
| $c^{[i]}$ | Number of i-th paging attempts, i.e., $c^{[i]} = \sum_{j \in \{1,2,\cdots,M\}} c_j^{[i]}$ |
| M | Number of gNBs registered in AMF |
| $\|L_j\|$ | Size of set $L_j$ (cardinality) |
| $P_{j,k}$ | Probability of moving from gNB j to gNB k |
| $P_j$ | $(P_{j,1}, P_{j,2}, \cdots, P_{j,M})$ |
| P | $(P_1; P_2; \cdots ; P_M)$ |

The AMF 130 may acquire mobility data. According to an embodiment of the disclosure, the AMF 130 may acquire mobility data from multiple UEs registered with the AMF. For example, the mobility data may include data on actual movement frequencies at which all UEs registered with the AMF move from a specific base station to the same or different base stations.

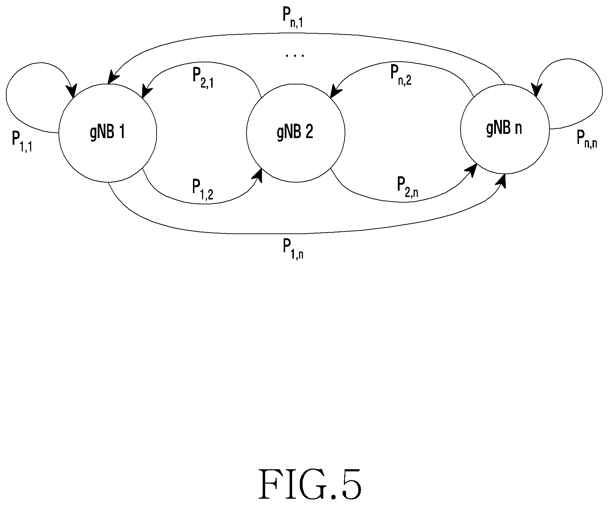

FIG. 5 illustrates mobility of a UE between base stations according to an embodiment of the disclosure.

Referring to FIG. 5, mobility of a UE between base stations may be described using equations. Mobility of a UE may refer to a probability that the UE moves between base stations. For example, a probability that a UE moves from one base station to one other base station among n base stations may be expressed as P. However, mobility of a UE is not limited to including only a probability that the UE moves from one base station to one other base station. Mobility of a UE may also include a probability that the UE moves within one base station belonging to n base stations.

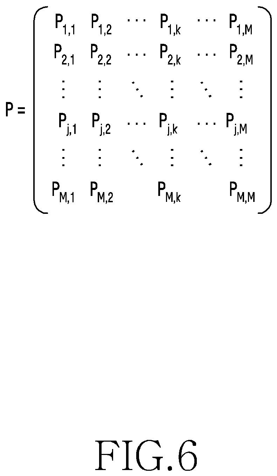

FIG. 6 illustrates a transition probability matrix according to various embodiments of the disclosure.

Referring to FIG. 6, a transition probability matrix may be shown. FIG. 6 may be a function that indicates, as a matrix, the mobility of the UE described above, that is, a probability that the UE moves from one base station to one other base station within n base stations, and a probability that the UE moves within one base station.

The AMF 130 may acquire a movement probability. According to an embodiment of the disclosure, the AMF 130 may acquire a movement probability based on a Markov model. According to an embodiment of the disclosure, the AMF 130 may acquire a movement probability of the UE, based on acquired mobility data. For example, when moving from base station j to base station k, a probability thereof may be expressed as $P_{j,k}$. According to an embodiment of the disclosure, the AMF 130 may acquire movement probability matrix P based on the acquired mobility data.

According to an embodiment of the disclosure, the AMF 130 may acquire a sequence for a probability that the UE moves from base station j, which has been last registered with the AMF 130, to base station k. The sequence for the probability that the UE moves from base station j to base station k may be expressed as $\{P_{j,k}\}_{k=1}^{M}$. Base station j that has been last registered with the AMF 130 may be a base station to which the UE in an RRC connected state has been connected before switching to an RRC idle state. Base station j that has been last registered with the AMF 130 may be a base station to which the UE in an RRC inactive state has been connected before switching to an RRC idle state.

According to an embodiment of the disclosure, the AMF 130 may acquire a subsequence excluding a case where the UE does not move from base station j. The subsequence may be expressed as $\{P_{j,k_l}\}_{l=1}^{M-1}$. According to an embodiment of the disclosure, subsequence $\{P_{j,k_l}\}_{l=1}^{M-1}$ may be a sequence sorted in descending order (i.e., $P_{j,k_1} \geq P_{j,k_2}$

$\geq \cdots P_{j,k_{M-1}}$, $k_l \neq j$). Based on acquired subsequence $\{P_{j,k_l}\}_{l=1}^{M-1}$, when the UE leaves base station j, a probability of moving to base station $k_l$ may be determined. For example, when the UE leaves base station j, the probability ($Q_{j,k_l}$) of moving to base station $k_l$ may be expressed as the following equation.

[equation 1]

$$Q_{j,k_l} = \begin{cases} \dfrac{P_{j,k_l}}{1-P_{j,j}}, & if\ P_{j,j} \neq 1 \\ 0 & , \quad if\ P_{j,j} = 1 \end{cases}$$

In Equation 1, $1 - P_{j,j}$ may indicate the probability of leaving base station j. For example, since a first paging message is transmitted only to base station j, $1 - P_{j,j}$ may indicate a probability ( $f_j^{[1]}$ ) that first paging fails.

According to an embodiment of the disclosure, $Q_{j,k_l}$ may be a sequence sorted in descending order (i.e., $Q_{j,k_1} \geq Q_{j,k_2} \geq \cdots Q_{j,k_{M-1}}$). For example, since $P_{j,K_l}$ is a sequence sorted in descending order, $Q_{j,k_l}$ may also be a sequence sorted in descending order. A failure probability of a second paging may be expressed using $Q_{j,kl}$ sorted in descending order. For example, when defined as $Q_j(k) = \sum_{r=1}^{k} Q_{j,r}\ (Q_j(0) = 0, k \in \{1,2,\dots,M-1\}$ , the failure probability of the second paging ( $f_j^{[2]}$ ) may be expressed as the following equation.

[equation 2]

$$f_j^{[2]}(x) = \begin{cases} 1 - Q_j(x), & if\ x \in \{1,2,\dots,M-1\} \\ 0 & , \quad if\ x \in \{M,M+1,\dots\} \end{cases}$$

$f_j^{[2]}$ is a function defined on a set of non-negative integers. For analysis, continuation extension of function $\bar{f}_j^{[2]}$ of $f_j^{[2]}$ may be defined as the following equation.

[equation 3]

$$\bar{f}_j^{[2]}(x) = \begin{cases} 1 & ,\ if\ x = 0 \\ -Q_{j,k}(x-k) - Q_j(k) + 1, & if\ k-1 < x \leq k \\ 0 & ,\ if\ x > M-1 \end{cases}$$

In Equation 3, $k \in \{1,2,\cdots,M-1\}$, $J. \in \{1,2,\cdots,M-1\}$, and $l \in \{1,2,\cdots,M-1\}$ may be satisfied. Therefore, $f_j^{[2]}$ may be a strictly decreasing function in interval [0, M-1]. In addition, referring to Equation 4 below, $f_j^{[2]}$ may be a convex function.

[equation 4]

$$\bar{f}_j^{[2]}(x) = \max_{k \in \{1,2,\dots,M\}} \{-Q_{j,k}x - Q_j(k) + kQ_{j,k} + 1\}$$

The AMF 130 may determine an objective function. According to an embodiment of the disclosure, the AMF 130 may determine an objective function based on a movement probability. According to an embodiment of the disclosure, the objective function may indicate the number of paging messages transmitted by the AMF 130. For example, a generalized objective function ($F(D)$) may be defined as the following equation.

[equation 5]

$$\mathcal{F}(D) = \sum_{j \in \{1,2,\dots,M\}} \left(\sum_{i \in \{1,2,\dots,h\}} c_j^{[i]} \left| D_j^{[i]} \right| \right)$$

Here,
$$c_j^{[i+1]} = c_j^{[i]} c_j^{[i]}(D_j^i)$$
may be defined. Each variable may be defined according to Table 1.

Base stations selected for paging may be determined from the definition of $\{Q_{j,k_l}\}_{l=1}^{M-1}$ (e.g., being sorted in descending order from gNBs with a high movement probability). Therefore, when the number of base stations to transmit a paging message in each paging order (h) is determined, the number of base stations to transmit a paging message may be determined. Hereinafter, an embodiment of the disclosure is described using, as an example, a case where a paging order is 3 (i.e., h=3).

Referring to aforementioned Equations 1 to 5, the number of paging messages transmitted by the AMF 130 in paging orders 2 and 3 may be defined as the following equation.

[equation 6]
$$c_j^{[2]} = c_j^{[1]} f_j^{[1]}\left(D_j^{[1]}\right) = c_j^{[1]}(1 - P_{j,j})$$

Here, since the AMF 130 transmits first paging only to base station j, $D_j^{[i]} = 1$ may be satisfied. If the first paging fails, second paging is performed, so that $c_j^{[2]}$ may be determined based on $f_j^{[1]}$.

[equation 7]
$$c_j^{[3]} = c_j^{[2]} f_j^{[2]}\left(D_j^{[2]}\right) = c_j^{[1]} f_j^{[1]}\left(D_j^{[1]}\right) f_j^{[2]}\left(D_j^{[2]}\right) = c_j^{[1]}(1 - P_{j,j})\overline{f}_j^{[2]}(d_j)$$

If the second paging fails, third paging is performed, so that $c_j^{[3]}$ may be determined based on $f_j^{[2]}$. Referring to aforementioned Equations 6 and 7, the objective function (F(d)) indicating the number of paging messages transmitted by the AMF 130 up to paging order 3 may be defined as the following equation.

[equation 8]
$$\mathcal{F}(d) = \sum_{j \in \{1,2,...,M\}} \mathcal{F}_j(d_j)$$
$$= \sum_{j \in \{1,2,...,M\}} c_j^{[1]}(1 + (1 - P_{j,j})(d_j + 1) + (1 - P_{j,j})\overline{f}_j^{[2]}(d_j)|L_j|)$$

Since the base stations are sorted in descending order starting from a base station with a highest mobility probability, if the AMF 130 determines the number ($d_j$) of base stations to transmit a paging message in paging order 2, the base stations to transmit a paging message, i.e., the paging base stations, may be identified.

According to an embodiment of the disclosure, in order to determine the number ($d_j$) of base stations to transmit a paging message, the following equation may be defined.

[equation 9]
$$g_j(x) = \begin{cases} c_j^{[1]}\left(1 - P_{j,j}\right)\left(1 - Q_{j,k}\right)|L_j| & , \ if \ k - 1 < x < k \\ c_j^{[1]}\left(1 - P_{j,j}\right)(1 - \frac{Q_{j,k} + Q_{j,k+1}}{2})|L_j| & , \ if \ x = k \\ 0 & , \ if \ x > M - 1 \end{cases}$$

The AMF 130 may determine the number of base stations to transmit a paging message. According to an embodiment of the disclosure, the AMF 130 may determine the number of base stations to transmit a paging message, via a machine learning algorithm. According to an embodiment of the disclosure, the AMF 130 may initiate the machine learning algorithm by configuring an initial value ( $d_j^{(1),*}$ ) of the number of base stations and an initial value ( $F_j^{(1),*}$ ) of the objective function according to the initial value of the number of base stations. In this case, the number ($d_j$) of base stations may be input data of the objective function. According to an embodiment of the disclosure, the AMF 130 may estimate the number of base stations of a subsequent learning order. For example, a equation for estimating the number of base stations of a subsequent learning order may be defined as follows.

[equation 10]
$$d_j^{(t+1)} \leftarrow d_j^{(t),*} - \eta_j^{(t)} g\left(d_j^{(t)}\right)$$

Here, $\eta_j^{(t)}$ may be a certain coefficient defined to estimate the number of base stations of a subsequent learning order.

According to an embodiment of the disclosure, the AMF 130 may configure a value of the objective function of a subsequent learning order. According to an embodiment of the disclosure, the AMF 130 may configure a value of the objective function of a subsequent learning order, based on a result of comparing an estimated value of the objective function of the subsequent learning order with a value of the objective function of the current learning order. For example, the AMF 130 may configure, as the value of the objective function of the subsequent learning order, a smaller value among the estimated value ($F_j(d_j^{(t+1)})$) of the objective function of the subsequent learning order and the value ($F_j^{(t),*}$) of the objective function of the current learning order. For example, since a value of the objective function indicates the number of paging messages, the number ($d_j$) of base stations may be configured in a way that minimizes the value of the objective function. For example, a equation for configuring the objective function of a subsequent learning order may be defined as follows.

[equation 11]
$$\mathcal{F}_j^{(t+1),*} \leftarrow \min \{\mathcal{F}_j^{(t),*}, \mathcal{F}_j(d_j^{(t+1)})\}$$

According to an embodiment of the disclosure, the AMF 130 may determine the number of base stations of a subsequent learning order. According to an embodiment of the disclosure, the AMF 130 may determine the number of base stations of a subsequent learning order, based on a result of comparing an estimated value of the objective function of the subsequent learning order with a value of the objective function of the current learning order. For example, if the estimated objective function of the subsequent learning order is smaller than the objective function of the current learning order, the AMF 130 may determine ($d_j^{(t+1),*} \leftarrow d_j^{(t+1)}$) the estimated number of base stations of the subsequent learning order in Equation 10 to be the number of base stations of the subsequent learning order. For example, since learning has been performed in a way of decreasing the number of paging messages, the AMF 130 may determine the estimated number of base stations of the subsequent learning order to be the number of base stations for subsequent learning. On the other hand, if the estimated value of the objective function of the subsequent learning order is larger than the value of the objective function of the current learning order, the AMF 130 may determine (e.g., $d_j^{(t+1),*} \leftarrow d_j^{(t),*}$) the number of base stations of the current learning order to be the number of base stations of the subsequent learning order. For example, the AMF 130 may not update the number ($d_j$) of base stations when the value of the objective function increases.

According to an embodiment of the disclosure, the AMF 130 may iterate, a designated number of times (e.g., $t_{max}$), the aforementioned operation for minimizing the number of paging messages. In this case, $t_{max}$ may be a value pre-designated as the number of iterations required to minimize the number of paging messages transmitted by the AMF 130. According to an embodiment of the disclosure, $t_{max}$ may be determined based on the number of base stations included in a TA. According to an embodiment of the disclosure, $t_{max}$ may be determined based on the number of base stations included in a TAL.

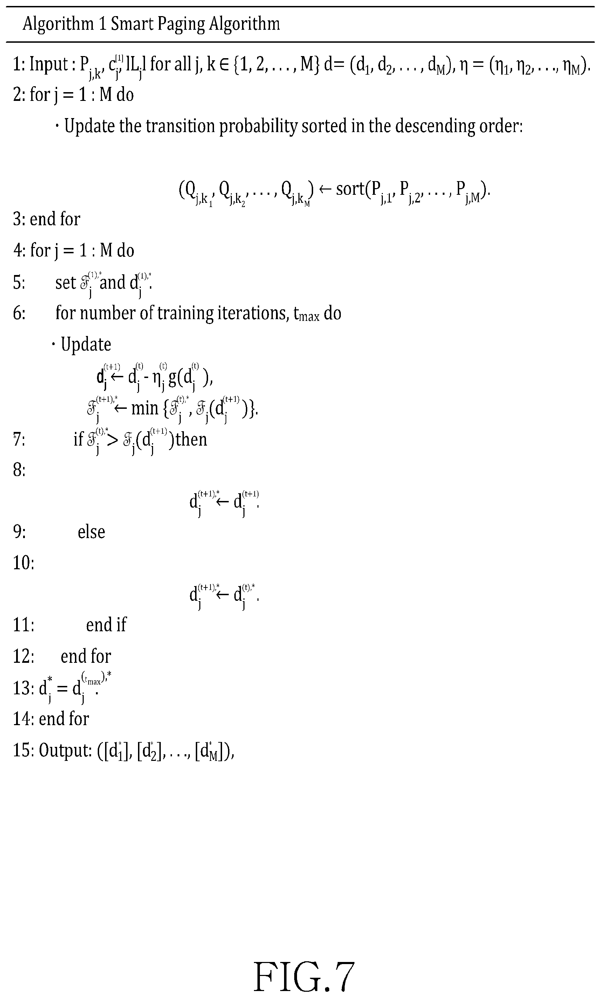

FIG. 7 illustrates a smart paging algorithm according to various embodiments of the disclosure.

Referring to FIG. 7, a paging algorithm for explaining the aforementioned operations of the AMF 130 may be described. The algorithm of FIG. 7 may be referred to as a smart paging algorithm. However, the algorithm is not limited to any one name.

The AMF 130 may identify base stations to transmit a paging message. According to an embodiment of the disclosure, the AMF 130 may identify base stations to transmit a paging message, based on a subsequence sorted in descending order from a base station having a high movement probability and the number of base stations to transmit a paging message. According to an embodiment of the disclosure, a subsequence sorted in descending order from a base station having a high movement probability may be identified for each paging order. According to an embodiment of the disclosure, the number of base stations to transmit a paging message may be identified for each paging order. According to an embodiment of the disclosure, the AMF 130 may transmit paging messages sequentially to identified base stations according to a paging order. According to an embodiment of the disclosure, the paging messages may be transmitted in a broadcasting manner. For example, when first paging fails, the AMF 130 may reduce paging load by transmitting the paging messages only to identified optimal base stations, instead of transmitting the paging messages to all base stations belonging to a TA or a TAL.

The aforementioned operations have been described as being performed by the AMF as a mobility management entity. However, embodiments of the disclosure are not limited thereto. According to an embodiment of the disclosure, another core network entity (e.g., MME) may perform the following operations. In addition, according to an embodiment of the disclosure, some of the aforementioned operations may be performed by the AMF, and others may be performed by an external device (e.g., a server) connected to the AMF. In addition, according to an embodiment of the disclosure, the aforementioned operations, i.e., the order-specific paging base station design operations, may be performed in an external device, and the AMF may acquire and apply only results of the aforementioned operations.

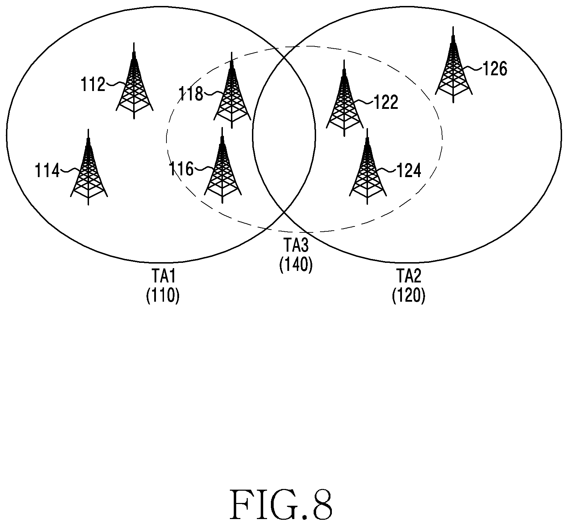

FIG. 8 illustrates candidate TAs via machine learning according to an embodiment of the disclosure.

Referring to FIG. 8, descriptions may be provided for a candidate (or predicted) TA (e.g., TA3) 140 including the base stations (e.g., base stations to which the AMF 130 will transmit a paging message) (including at least one of 116, 118, 124, or 122) identified via the smart paging algorithm of FIG. 7. According to an embodiment of the disclosure, for TA3, a new candidate TA may be identified, the TA including at least one base station identified via the aforementioned procedures (e.g., the smart paging algorithm) among the base stations included in TA1 and TA2. In this case, the candidate TA may indicate a TA predicted by the AMF (or MME) via the aforementioned procedures.

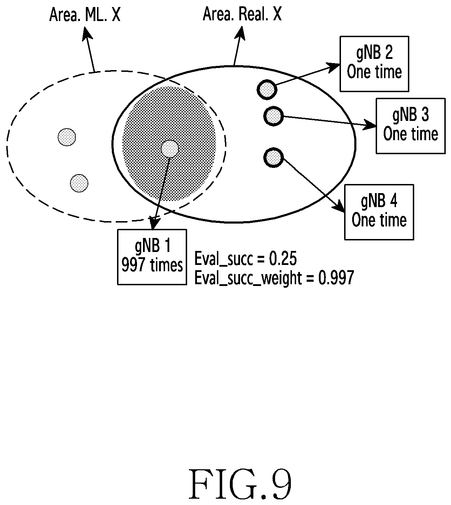

FIG. 9 illustrates performance evaluation results according to an embodiment of the disclosure.

Referring to FIG. 9, methods for evaluating the reliability of the base stations to transmit a paging message, which are derived by the algorithm of FIG. 7, may be described. The methods for evaluating the reliability of the base stations to transmit a paging message may be methods for evaluating performance of the aforementioned machine learning results (e.g., the smart paging algorithm) of FIG. 7. Before evaluating the performance of the machine learning results, the following configurations may be defined.

A source base station (e.g., a source gNB) that provides a service to a UE before the UE moves may be configured to be X. Area.ML.X (e.g., based on gNB X) may indicate a set of predicted gNBs derived via a proposed algorithm (e.g., the smart paging algorithm). For example, Area.ML.X may indicate a set of optimized (or predicted) destination base stations (e.g., destination gNBs) for source gNB X. In addition, Area.Real.X (e.g., based on gNB X) may be a set of base stations to which the UE has actually moved. For example, Area.Real.X may indicate a set of destination base stations (e.g., destination gNBs) that actually have made a paging response to the source base station (e.g., source gNB X). In addition, $|\cdot|$ may indicate a cardinality (or degree) of the set, i.e., the number of elements included in the set. For example, $|\{gNB1, gNB2\}| = 2$ may be satisfied.

The method for evaluating performance of machine learning results may be expressed as the following equation.

[equation 12]

$$\text{Eval\_succ} := \frac{|\text{Area.ML.X} \cap \text{Area.Real.X}|}{|\text{Area.Real.X}|} \in [0,1]$$

(interpretation: the number of gNBs to which the UE has actually moved among gNBs included in the predicted paging area/the number of gNBs to which the UE has actually moved)

Equation 12 may indicate a value obtained by dividing the number of base stations (e.g., gNBs), to which the UE has actually moved, included in the predicted paging area by the number of the base station (e.g., gNBs) to which the UE has actually moved. Eval_succ is evaluation based on the area to which the UE has moved, and may be evaluated via very fast calculation.

[equation 13]

$$\text{Eval\_succ\_weight} := \frac{|(\text{Area.ML.X} \cap \text{Area.Real.X})_w|}{|(\text{Area.Real.X})_w|} \in [0,1]$$

(interpretation = the total number of times the UE has moved to Area.ML.X$\cap$Area.Real.X/the total number of times the UE has moved to gNB within Area_Real_X)

Equation 13 may indicate a value obtained by dividing the total number of times the UE has moved to base stations, which correspond to the intersection of a set of predicted base stations and a set of base stations to which the UE has actually moved, by the total number of times the UE has actually moved to the base stations. Compared to Equation 12 (e.g., Eval_succ) described above, Eval_succ_weight may be a more accurate performance evaluation method because the total number of actual UE movements is included.

For example, the number of times the UE has moved from gNB X to gNB 1 is 997 in FIG. 9, and when the number of times the UE has moved from gNB X to gNB 1 is 997, Eval_succ may be the number of gNBs existing in the predicted paging area, relative to the number of gNBs to which the UE has moved. Therefore, Eval_succ=1/(1+3)=0.25 may be satisfied. In addition, Eval_succ_weight may be the number of movements belongs to the predicted paging area, relative to the total number of times the UE has moved to another gNB. Therefore, Eval_succ_weight=997/(997 + 3)=0.997 may be satisfied. Therefore, a result of performance evaluation (e.g., Eval_succ_weight) derived based on Equation 13 may show a more accurate result value compared to a result of performance evaluation (e.g., Eval_succ) derived based on Equation 12.

However, for the performance evaluation method for machine learning, it may not be required to perform evaluation by only Equation 13 described above. In addition, the aforementioned performance evaluation methods are merely examples, and the performance evaluation method for machine learning may be performed by a method other than Equation 12 or 13 described above. In addition, both Equations 12 and 13 described above may be considered as the performance evaluation method.

Evaluation on the predicted paging area via machine learning based on the aforementioned evaluation methods may be performed by an AI model. An AI model for determining reliability of a predicted paging area derived via machine learning may perform an operation for increasing the reliability of the predicted paging area via the aforementioned machine learning based on results of performance evaluation.

According to an embodiment of the disclosure, if a result value of performance evaluation derived by at least one of the aforementioned performance evaluation methods is less than or equal to a certain threshold value (e.g., a minimum performance threshold value determined by a network operator), the AI model may cause the AMF to perform the aforementioned smart paging algorithm again based on more mobility data. For example, the AI model may cause the AMF to derive a new predicted paging area by using mobility data for a longer period than the mobility data used to derive the predicted paging area to be evaluated. In this case, the mobility data for the longer period may indicate mobility data of the UE accumulated over a longer period of time.

According to an embodiment of the disclosure, if the result value of performance evaluation derived by at least one of the aforementioned performance evaluation methods is larger than the certain threshold value (e.g., the minimum performance threshold value determined by the network operator), the AI model may cause the AMF to perform a paging procedure based on the predicted paging area that has already been derived. However, even if the result value of performance evaluation derived by at least one of the aforementioned performance evaluation methods is equal to the certain threshold value, the AI model may cause the AMF to perform a paging procedure based on the derived predicted paging area.

The AI model may determine whether to perform the aforementioned operations, based on requirements including at least one of a certain threshold value, a communication environment of a cell where a UE is located, or an average movement area distribution of UEs. In addition, the AI model may be included in a controller 430 of the AMF, and operations of the AI model may be performed by at least one processor included in the controller 430. Alternatively, the AI model may be included in a network entity included in the AMF separately from the controller 430 of the AMF.

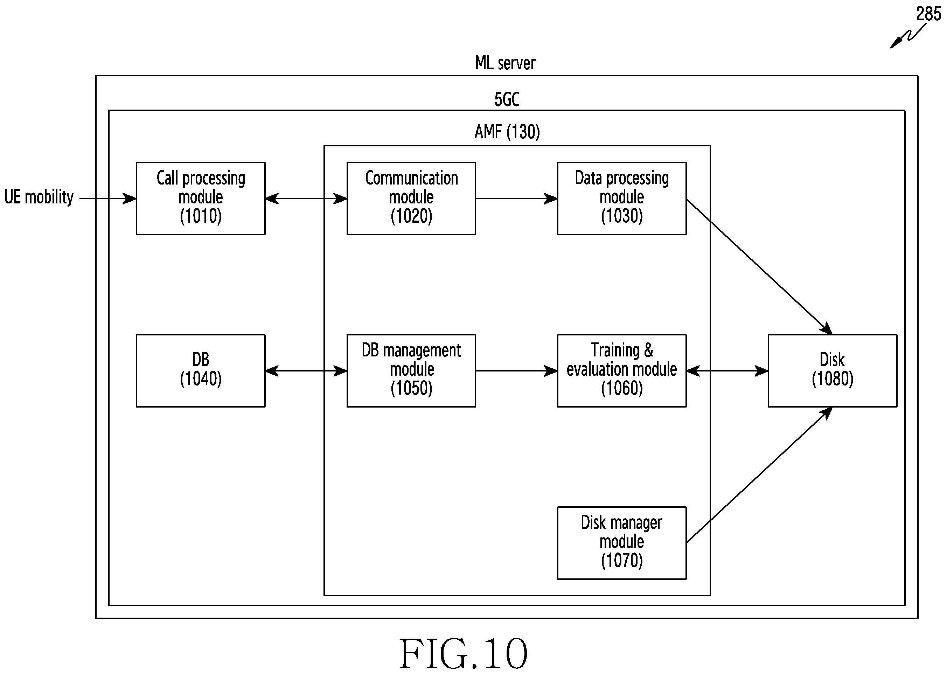

FIG. 10 illustrates a configuration of a network entity for smart paging according to various embodiments of the disclosure.

Referring to FIG. 10, descriptions may be provided to configurations of a network entity (e.g., the controller 430) which performs a smart paging operation and an interaction between the configurations.

A call processing module 1010 may collect mobility of a UE and transfer collected data to a communication module 1020 of a machine learning server (ML server).

The communication module 1020 may transfer, to a data processing module 1030, the collected data (e.g., mobility data) received from the call processing module 1010. In addition, the communication module 1020 may transfer information on a paging area optimized for each base station, which is received from a training & evaluation module 1060, and the like to the call processing module 1010.

The data processing module 1030 may periodically merge the collected data (e.g., the mobility data) received from the communication module 1020 and store the same in a disk 1080.

A DB manager module 1070 may read network configuration information (e.g., including at least one of gNB, TA, or TAL configurations) stored in a DB, and transfer the read network configuration information to the training & evaluation module 1060.

The training & evaluation module 1060 may perform a machine learning algorithm operation and an evaluation operation based on the data stored in the disk 1080. The training & evaluation module 1060 may periodically store predicted paging areas in the disk 1080, and transfer the same to the communication module 1020.

A disk manager module 1070 may periodically delete the data stored in the disk 1080 according to a configured value.

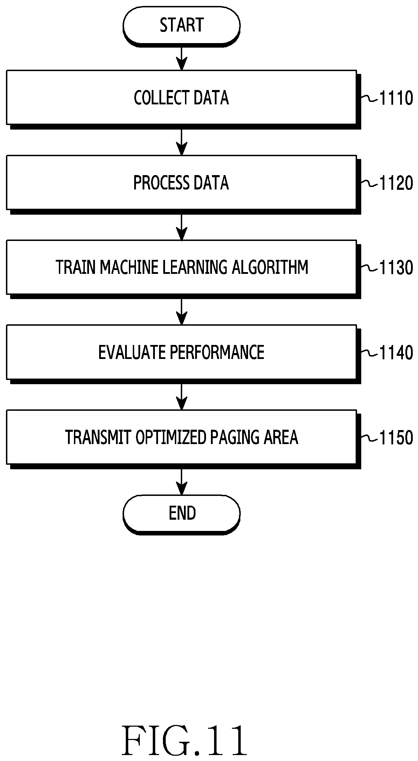

FIG. 11 illustrates an operation sequence of an AMF for smart paging according to various embodiments of the disclosure.

Referring to FIG. 11, descriptions may be provided for a method of deriving an optimal paging area via prediction of base stations to transmit a paging message via machine learning performed by an AMF (or MME) and performance evaluation for a machine learning method.

In operation 1110, the call processing module 1010 may collect mobility data and transfer the same to the communication module 1020. In this case, the data may indicate mobility data that a UE has transmitted via a base station. The mobility data of the UE may be stored in a storage unit 420 of the AMF. Therefore, the mobility data of the UE, which is to be used by the AMF to derive an optimal paging area, may be a part or all of the mobility data stored in the storage unit 420. In addition, an overlap period of the mobility data for deriving an optimal paging area among the mobility data stored in the storage unit 420 may be determined by an AI model.

In operation 1120, the data processing module 1030 may convert the mobility data of the UE into a form for machine learning (e.g., an objective function $F(D)$). Specifically, the data processing module 1030 may calculate a probability of the UE moving to destination base stations based on a source base station and perform conversion. In addition, the AMF may collect the mobility data to create training data (e.g., Equations 1 to 9).

In operation 1130, the training and evaluation module 1060 may perform the smart paging algorithm of FIG. 7 by using, as input data, refined data output via operation 1020. In this case, the data output via operation 1020 may have various values depending on an overlap scheme. For example, there may be a scheme of overlapping data collected for a week, a scheme of overlapping data collected for a day, or a scheme of overlapping data equivalent to an amount of three weeks every hour. However, the overlap schemes are not limited to the examples described above, and the data output via operation 1020 may be output as values obtained by overlapping in various ways other than the examples described above. The AMF may request additional information (e.g., the number of base stations included in a TAL) required for training from the DB manager module 1050.

In operation 1140, the training and evaluation module 1060 may evaluate, via test data (e.g., the example of FIG. 9), reliability of a predicted paging area derived from the learning algorithm of the data processing module 1030. In this case, an optimized paging area derived via the learning algorithm may be affected by the data overlap scheme. For example, the reliability of the optimized paging area derived via the learning algorithm may differ by at least one of a data overlap period or a unit thereof.

In order to perform the paging procedure based on the derived optimized paging area in operation 1040, information on the derived optimized paging area may be transferred to the call processing module 1010 in operation 1150.

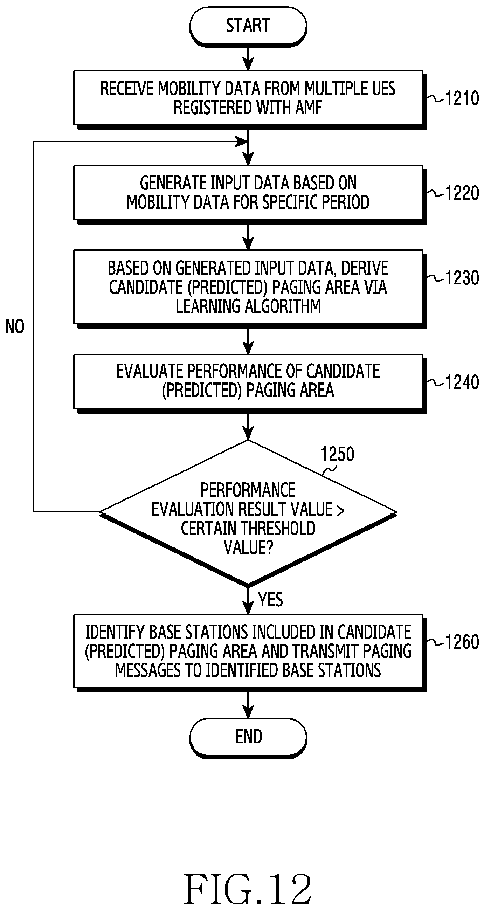

FIG. 12 illustrates an artificial intelligence (AI)-based performance evaluation sequence according to various embodiments of the disclosure.

Referring to FIG. 12, a sequence of AI-based operations of an AMF for deriving an optimized paging area may be described. A machine learning algorithm of FIG. 12 may include an AI model. In this case, the AI model may be a model trained to output a predicted paging area by using mobility data for a predetermined period and input data generated from the mobility data.

In operation 1210, the AMF may receive mobility data from multiple UEs registered with the AMF. For example, the mobility data may include mobility data of the multiple UEs over a specific period in the past (e.g., time before using the learning algorithm for deriving a paging area), for all the multiple UEs registered with the AMF.

In operation 1220, the AMF may generate input data based on the mobility data for the specific period among the collected mobility data. For example, the AMF may select mobility data for a first period from among the received mobility data, and generate the input data based on the mobility data for the selected first period. In this case, the input data may be data that is input to perform the learning algorithm. Alternatively, the input data may indicate training data required for the AI model to derive an optimal predicted paging area based on the learning algorithm.

In operation 1230, the AMF may derive a predicted paging area via machine learning based on the generated input data. The AMF may derive the predicted paging area from the input data based on the mobility data for the first period, by using the learning algorithm trained to derive a predicted paging area based on the mobility data.

In operation 1240, the AMF may perform reliability evaluation on the predicted paging area derived via the machine learning algorithm. According to an embodiment of the disclosure, the AMF may determine reliability of a derived first candidate paging area by using test data for the first period. The test data for the first period may include mobility data related to the multiple UEs after the first period. The mobility data in operation 1210 may include the mobility data for the first period and that for a period after the first period, and the mobility data for the first period may be input to the learning algorithm so as to be used to derive a candidate paging area. The mobility data after the first period may be used to evaluate reliability of a candidate paging area derived from the mobility data for the first period. In this case, the candidate paging area may be used in the same sense as a predicted paging area.

According to an embodiment of the disclosure, operation 1240 may indicate a performance evaluation operation for the learning algorithm for deriving a predicted paging area. Accordingly, the AI model may evaluate the performance of the learning algorithm, and may omit, change, and/or add at least one operation of the smart paging algorithm of FIG. 7.

In operation 1250, the AMF may identify whether a result value of the performance evaluation of operation 1240 has a value larger than a certain threshold value (e.g., a minimum performance threshold value determined by a network operator). If the performance evaluation result value is smaller than or equal to the certain threshold value, the AMF may return to operation 1220 and perform operations (e.g., operations 1220 to 1250) to derive an optimized paging area again based on new mobility data. According to an embodiment of the disclosure, the AMF may select mobility data for a second period from among the mobility data, and generate new input data based on the selected mobility data for the second period. In this case, the mobility data for the second period may indicate data obtained by an overlap (or collection) scheme different from that of the mobility data for the first period, which is used to derive the predicted paging area subject to evaluation. For example, the overlap (or collection) scheme may be at least one of a scheme of varying a collecting period of mobility data or a scheme of varying a unit of a collecting period.

In operation 1260, if the performance evaluation result value is larger than the certain threshold value, the AMF may identify base stations included in the candidate (predicted) paging area and perform a paging procedure by transmitting paging messages to the identified base stations. However, according to an embodiment of the disclosure, even if the performance evaluation result value is larger than the certain threshold value, the AMF may return to operation 1220 according to other requirements (e.g., including at least one of a communication environment of a cell where the UE is located, or an average movement area distribution of the UEs) and perform operations (e.g., operations 1220 to 1250) to derive an optimized paging area again based on new mobility data. In this case, derivation of the predicted paging area and reliability evaluation of the derived paging area may be additionally performed based on mobility data for a third period different from the first period and the second period. According to an embodiment of the disclosure, even if the performance evaluation result value is larger than the certain threshold value, the AL model may omit, change, and/or add at least one operation of the smart paging algorithm of FIG. 7 according to other requirements (e.g., including at least one of a communication environment of a cell where the UE is located, or an average movement area distribution of the UEs). In addition, the AI model may derive an optimal paging area based on the improved smart paging algorithm.

The AI model may include multiple neural network layers. Each of the multiple neural network layers has multiple weight values, and performs neural network calculation via calculation between the multiple weight values and a calculation result of a previous layer. The multiple weight values of the multiple neural network layers may be optimized by learning results of the AI model. For example, the multiple weight values may be updated so that a loss value or cost value acquired by the AI model during a learning procedure is reduced or minimized. The artificial neural network may include a deep neural network (DNN), for example, a convolutional neural network (CNN), a deep neural network (DNN), a recurrent neural network (RNN), a restricted Boltzmann machine (RBM), a deep belief network (DBN), a bidirectional recurrent deep neural network (BRDNN), or a deep Q-network, but is not limited to the example described above.

If paging fails, the method according to various embodiments of the disclosure can provide an effect of reducing the number of paging messages, when compared to the conventional technology of sequentially transmitting paging messages to a base station, base stations belonging to a TA, and base stations belonging to a TAL. For example, the method according to various embodiments of the disclosure may reduce the number of paging messages by sorting base stations, to which a UE is highly likely to move, in descending order based on mobility data, and determining the number of base stations to transmit a paging message in a paging order via a machine learning algorithm. Since the number of paging messages required for mobility management is reduced, wired resources and/or wireless resources of a communication network may be operated more efficiently. In addition, in the 5G communication system where the number of base stations included in the same area is larger than that of LTE, a greater advantage in terms of cost may be achieved when the same ratio of performance gain as that of the LTE communication system is obtained.

In addition, a scheme of transmitting paging messages to all base stations belonging to a TA and/or a TAL may cause paging load which may consume a significant portion of network resources. Therefore, descriptions have been provided for a technique of reducing paging load by transmitting paging messages only to a specific number of base stations, to which a UE is highly likely to have moved, via mobility data of the UE and a machine learning algorithm. If the number of paging messages transmitted from an AMF or an MME is reduced, the number of RRC paging messages transmitted from base stations to a UE via a logical channel (e.g., a paging control channel (PCCH)), a transport channel (e.g., a paging channel (PCH)), and a physical channel (e.g., a physical downlink shared channel (PDSCH)) is reduced as a result. For example, according to various embodiments of the disclosure, by reducing the number of unnecessary paging message transmissions, a service quality can be maintained or improved and, at the same time, the efficiency of wired and wireless resources required for the operation of the wireless communication system can be increased. The disclosure has been described based on a static tracking area list (S-TAL), but may also be applicable to a dynamic tracking area list (D-TAL) by extending the machine learning algorithm.

In addition, if a data overlap scheme is diversified via simulation using an AI model, better performance can be achieved in terms of a paging success rate. According to embodiments of the disclosure, a specific number of base stations, to which a UE is highly likely to have moved, may be identified via mobility data of the UE and a machine learning algorithm, and an optimal paging area may be derived by varying a data overlap scheme via a performance evaluation method using an AI model.

A method for identifying a base station to which a network node is to transmit a paging message in a wireless communication system according to an embodiment of the disclosure as described above may include: receiving, from multiple UEs registered with an AMF, mobility data related to movement frequencies of the multiple UEs; based on a learning algorithm trained to derive a candidate paging area based on the mobility data, and mobility data for a first period among the mobility data, deriving a first candidate paging area; determining reliability of the derived first candidate paging area by using test data for the first period; based on the reliability, identifying at least one base station to receive a paging message transmitted from the network node; and transmitting the paging message to the at least one base station, wherein the test data for the first period includes mobility data related to the multiple UEs after the first period.

According to an embodiment of the disclosure, if the reliability is larger than or equal to a certain threshold value, a base station included in the first candidate paging area may be identified as the at least one base station.

According to an embodiment of the disclosure, the method may further include: if the reliability is smaller than a certain threshold value, deriving a second candidate paging area based on the learning algorithm and mobility data for a second period among the mobility data; additionally determining reliability of the second candidate paging area by using test data for the second period; and based on the additionally determined reliability, additionally identifying the at least one base station, wherein the test data for the second period includes mobility data related to the multiple UEs after the second period.

According to an embodiment of the disclosure, the deriving of the first candidate paging area may include: based on the mobility data for the first period, identifying movement probabilities of the multiple UEs between base stations belonging to a TAL; generating an objective function based on the identified movement probabilities; and deriving the first candidate paging area by using the objective function and the learning algorithm.

According to an embodiment of the disclosure, the mobility data for the first period and the mobility data for the second period may be at least one of mobility data collected for different periods or mobility data collected in different time units.

According to an embodiment of the disclosure, the objective function may be generated based on the number of paging messages transmitted by the network node.

According to an embodiment of the disclosure, the identifying of the movement probabilities of the multiple UEs between the base stations belonging to the TAL may include: identifying a base station having transmitted, to the network node, registration request messages received from the multiple UEs; and identifying probabilities that the multiple UEs are to move from a base station registered with the network node to another base station, wherein the another base station is a base station that is not registered with the network node among the base stations belonging to the TAL.

According to an embodiment of the disclosure, the network node may be the AMF or an MME.

A network node in a wireless communication system according to an embodiment of the disclosure as described above may include at least one transceiver, and at least one processor operably coupled to the at least one transceiver, wherein the at least one processor is configured to: receive, from multiple UEs registered with an AMF, mobility data related to movement frequencies of the multiple UEs; based on a learning algorithm trained to derive a candidate paging area based on the mobility data, and mobility data for a first period among the mobility data, derive a first candidate paging area; determine reliability of the derived first candidate paging area by using test data for the first period; based on the reliability, identify at least one base station to receive a paging message transmitted from the network node; and transmit the paging message to the at least one base station, wherein the test data for the first period includes mobility data related to the multiple UEs after the first period.

According to an embodiment of the disclosure, if the reliability is larger than or equal to a certain threshold value, a base station included in the first candidate paging area may be identified as the at least one base station.

According to an embodiment of the disclosure, the at least one processor may be configured to: if the reliability is smaller than a certain threshold value, derive a second candidate paging area based on the learning algorithm and mobility data for a second period among the mobility data; additionally determine reliability of the second candidate paging area by using test data for the second period; and based on the additionally determined reliability, additionally identify the at least one base station, wherein the test data for the second period includes mobility data related to the multiple UEs after the second period.

According to an embodiment of the disclosure, during the deriving of the first candidate paging area, the at least one processor may be configured to: based on the mobility data for the first period, identify movement probabilities of the multiple UEs between base stations belonging to a TAL; generate an objective function based on the identified movement probabilities; and derive the first candidate paging area by using the objective function and the learning algorithm.

According to an embodiment of the disclosure, the mobility data for the first period and the mobility data for the second period may be at least one of mobility data collected for different periods or mobility data collected in different time units.

According to an embodiment of the disclosure, the objective function may be generated based on the number of paging messages transmitted by the network node.

According to an embodiment of the disclosure, the at least one processor may be configured to: identify a base station having transmitted, to the network node, registration request messages received from the multiple UEs; and identify probabilities that the multiple UEs are to move from a base station registered with the network node to another base station, wherein the another base station is a base station that is not registered with the network node among the base stations belonging to the TAL.

According to an embodiment of the disclosure, the network node may be the AMF or an MME.

An AI-related function according to the disclosure is operated via a processor and memory. The processor may include one or multiple processors. In this case, the one or multiple processors may be a general-purpose processor, such as a CPU, an AP, and a digital signal processor (DSP), a graphic-only processor, such as a GPU and a vision processing unit (VPU), or an AI-only processor, such as an NPU. The one or multiple processors control input data to be processed, according to a predefined operation rule or AI model stored in the memory. Alternatively, if the one or multiple processors are AI-only processors, the AI-only processors may be designed based on a hardware structure specialized for processing of a specific AI model.

The predefined operation rule or AI model has been created via training. Here, the creation via training indicates that a basic AI model is trained using multiple pieces of training data via a learning algorithm, thereby creating a predefined operation rule or AI model configured to perform a desired characteristic (or purpose). Such training may be performed on a device itself on which AI is executed or may be performed via a separate server and/or system according to the disclosure. Examples of the learning algorithm include, but are not limited to, supervised learning, unsupervised learning, semi-supervised learning, or reinforcement learning.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including random access memory and flash memory, read only memory (ROM), electrically erasable programmable read only memory (EEPROM), magnetic disc storage device, compact disc-ROM (CD-ROM), digital versatile discs (DVDs), or other type optical storage devices, or a magnetic cassette. Alternatively, any combination of some or all of them may form memory in which the program is stored. In addition, a plurality of such memories may be included in the electronic device.

Furthermore, the programs may be stored in an attachable storage device which can access the electronic device through communication networks, such as the Internet, intranet, local area network (LAN), wide LAN (WLAN), and storage area network (SAN) or a combination thereof. Such a storage device may access the electronic device via an external port. In addition, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

**Claims**

1. A method for identifying a base station to which a network node is to transmit a paging message in a wireless communication system, the method comprising:

   receiving, from multiple terminals registered with an access and mobility management function (AMF) entity, mobility data related to movement frequencies of the multiple terminals;
   based on a learning algorithm trained to derive a candidate paging area based on the mobility data, and mobility data for a first period among the mobility data, deriving a first candidate paging area;
   determining reliability of the derived first candidate paging area based on test data for the first period;
   based on the reliability, identifying at least one base station to receive a paging message transmitted from the network node; and

transmitting, to the at least one base station, the paging message,

wherein the test data for the first period comprises mobility data related to the multiple terminals after the first period.

2. The method of claim 1, wherein, in case that the reliability is larger than or equal to a certain threshold value, a base station included in the first candidate paging area is identified as the at least one base station.

3. The method of claim 1, further comprising:

in case that the reliability is smaller than a certain threshold value, deriving a second candidate paging area based on the learning algorithm and mobility data for a second period among the mobility data;

additionally determining reliability of the second candidate paging area based on test data for the second period; and

based on the additionally determined reliability, additionally identifying the at least one base station,

wherein the test data for the second period includes mobility data related to the multiple terminals after the second period.

4. The method of claim 1, wherein the deriving of the first candidate paging area comprises:

based on the mobility data for the first period, identifying movement probabilities of the multiple terminals between base stations belonging to a tracking area list (TAL);

generating an objective function based on the identified movement probabilities; and

deriving the first candidate paging area based on the objective function and the learning algorithm.

5. The method of claim 3, wherein the mobility data for the first period and the mobility data for the second period are at least one of mobility data collected for different periods or mobility data collected in different time units.

6. The method of claim 4, wherein the objective function is generated based on a number of paging messages transmitted by the network node.

7. The method of claim 4,

wherein the identifying of the movement probabilities of the multiple terminals between the base stations belonging to the TAL comprises:

identifying a base station having transmitted, to the network node, registration request messages received from the multiple terminals, and

identifying probabilities that the multiple terminals are to move from a base station registered with the network node to another base station, and

wherein the another base station is a base station that is not registered with the network node among the base stations belonging to the TAL.

8. The method of claim 1, wherein the network node is an access and mobility management function (AMF) entity or a mobility management entity (MME).

9. A network node comprising:

a transceiver;

a processor coupled with the transceiver; and

memory storing instructions that, when executed by the processor, cause the node device to:

receive, from multiple terminals registered with an access and mobility management function (AMF) entity, mobility data related to movement frequencies of the multiple terminals,

based on a learning algorithm trained to derive a candidate paging area based on the mobility data, and mobility data for a first period among the mobility data, derive a first candidate paging area,

determine reliability of the derived first candidate paging area based on test data for the first period,

based on the reliability, identify at least one base station to receive a paging message transmitted from the network node, and

transmit, to the at least one base station, the paging message,

wherein the test data for the first period includes mobility data related to the multiple terminals after the first period.

10. The network node of claim 9, wherein, in case that the reliability is larger than or equal to a certain threshold value, a base station included in the first candidate paging area is identified as the at least one base station.

11. The network node of claim 9, wherein the memory further comprises the instructions that, when executed by the processor, cause the network node to:

in case that the reliability is smaller than a certain threshold value, derive a second candidate paging area based on the learning algorithm and mobility data for a second period among the mobility data;

additionally determine reliability of the second candidate paging area based on test data for the second period; and

based on the additionally determined reliability, additionally identify the at least one base station, and

wherein the test data for the second period includes mobility data related to the multiple terminals after the second period.

12. The network node of claim 9, wherein the memory further comprises the instructions that, when executed by the processor, cause the network node to:

based on the mobility data for the first period, identify movement probabilities of the multiple terminals between base stations belonging to a tracking area list (TAL);

generate an objective function based on the identified movement probabilities; and

derive the first candidate paging area based on the objective function and the learning algorithm.

13. The network node of claim 11, wherein the mobility data for the first period and the mobility data for the second period are at least one of mobility data collected for different periods or mobility data collected in different time units.

14. The network node of claim 12, wherein the objective function is generated based on a number of paging messages transmitted by the network node.

15. The network node of claim 12,

wherein the memory further comprises the instructions that, when executed by the processor, cause the network node to:

identify a base station having transmitted, to the network node, registration request messages received from the multiple terminals, and

identify probabilities that the multiple terminals are to move from a base station registered with the network node to another base station, and

wherein the another base station is a base station that is not registered with the network node among the base stations belonging to the TAL, and

wherein the network node is an access and mobility management function (AMF) entity or a mobility management entity (MME).

FIG.1

230

Controller

210

Communication
unit

220

Storage unit

101

FIG.2

FIG.3

FIG.4

FIG.5

$$P = \begin{pmatrix} P_{1,1} & P_{1,2} & \cdots & P_{1,k} & \cdots & P_{1,M} \\ P_{2,1} & P_{2,2} & \cdots & P_{2,k} & \cdots & P_{2,M} \\ \vdots & \vdots & \ddots & \vdots & \ddots & \vdots \\ P_{j,1} & P_{j,2} & \cdots & P_{j,k} & \cdots & P_{j,M} \\ \vdots & \vdots & \ddots & \vdots & \ddots & \vdots \\ P_{M,1} & P_{M,2} & & P_{M,k} & & P_{M,M} \end{pmatrix}$$

# FIG.6

Algorithm 1 Smart Paging Algorithm

1: Input : $P_{j,k}$, $c_j^{[1]}$|$L_j$] for all j, k ∈ {1, 2, . . . , M} d= $(d_1, d_2, . . . , d_M)$, η = $(\eta_1, \eta_2, . . ., \eta_M)$.

2: for j = 1 : M do

    · Update the transition probability sorted in the descending order:

$$(Q_{j,k_1}, Q_{j,k_2}, . . ., Q_{j,k_M}) \leftarrow sort(P_{j,1}, P_{j,2}, . . ., P_{j,M}).$$

3: end for

4: for j = 1 : M do

5:    set $\mathcal{F}_j^{(1),*}$ and $d_j^{(1),*}$.

6:    for number of training iterations, $t_{max}$ do

    · Update

$$d_j^{(t+1)} \leftarrow d_j^{(t)} - \eta_j^{(t)} g(d_j^{(t)}),$$
$$\mathcal{F}_j^{(t+1),*} \leftarrow min\{\mathcal{F}_j^{(t),*}, \mathcal{F}_j(d_j^{(t+1)})\}.$$

7:    if $\mathcal{F}_j^{(t),*} > \mathcal{F}_j(d_j^{(t+1)})$ then

8:

$$d_j^{(t+1),*} \leftarrow d_j^{(t+1)}.$$

9:    else

10:

$$d_j^{(t+1),*} \leftarrow d_j^{(t),*}.$$

11:    end if

12:    end for

13: $d_j^* = d_j^{(t_{max}),*}$.

14: end for

15: Output: $([d_1^*], [d_2^*], . . ., [d_M^*])$,

# FIG.7

FIG.8

FIG.9

285

## ML server

### 5GC

#### AMF (130)

Call processing module (1010)

Communication module (1020)

Data processing module (1030)

DB (1040)

DB management module (1050)

Training & evaluation module (1060)

Disk (1080)

Disk manager module (1070)

UE mobility →

FIG.10

START

COLLECT DATA ∿1110

PROCESS DATA ∿1120

TRAIN MACHINE LEARNING ALGORITHM ∿1130

EVALUATE PERFORMANCE ∿1140

TRANSMIT OPTIMIZED PAGING AREA ∿1150

END

FIG.11

START

RECEIVE MOBILITY DATA FROM MULTIPLE UES
REGISTERED WITH AMF ~1210

GENERATE INPUT DATA BASED ON
MOBILITY DATA FOR SPECIFIC PERIOD ~1220

BASED ON GENERATED INPUT DATA, DERIVE
CANDIDATE (PREDICTED) PAGING AREA VIA
LEARNING ALGORITHM ~1230

EVALUATE PERFORMANCE OF CANDIDATE
(PREDICTED) PAGING AREA ~1240

NO

1250

PERFORMANCE
EVALUATION RESULT VALUE >
CERTAIN THRESHOLD
VALUE?

YES

IDENTIFY BASE STATIONS INCLUDED IN CANDIDATE
(PREDICTED) PAGING AREA AND TRANSMIT PAGING
MESSAGES TO IDENTIFIED BASE STATIONS ~1260

END

FIG.12

## INTERNATIONAL SEARCH REPORT

| International application No. |
|---|
| **PCT/KR2023/016744** |

### A. CLASSIFICATION OF SUBJECT MATTER

**H04W 68/02**(2009.01)i; **H04W 8/02**(2009.01)i; **H04W 60/04**(2009.01)i; **G06N 20/00**(2019.01)i

According to International Patent Classification (IPC) or to both national classification and IPC

### B. FIELDS SEARCHED

Minimum documentation searched (classification system followed by classification symbols)

H04W 68/02(2009.01); G01M 99/00(2011.01); G06N 20/00(2019.01); G06N 3/04(2006.01); G06N 3/08(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: AMF, 페이징(paging), 학습(learning), 이동성(mobility), 영역(area)

### C. DOCUMENTS CONSIDERED TO BE RELEVANT

| Category* | Citation of document, with indication, where appropriate, of the relevant passages | Relevant to claim No. |
|---|---|---|
| A | KR 10-2022-0033384 A (SAMSUNG ELECTRONICS CO., LTD.) 16 March 2022 (2022-03-16)<br>See paragraphs [0072]-[0120]; and claims 1-12. | 1-15 |
| A | KR 10-2405484 B1 (INDUSTRY ACADEMY COOPERATION FOUNDATION OF SEJONG UNIVERSITY) 03 June 2022 (2022-06-03)<br>See paragraphs [0048]-[0055]; and claims 1-7 and 10. | 1-15 |
| A | KR 10-2408756 B1 (MITSUBISHI ELECTRIC CORPORATION) 15 June 2022 (2022-06-15)<br>See paragraphs [0036]-[0056]; and claims 1-6. | 1-15 |
| A | US 8565795 B2 (YIN, Yu et al.) 22 October 2013 (2013-10-22)<br>See column 18, line 34 - column 22, line 39; and claims 1-18. | 1-15 |
| A | 3GPP; TSG SA; Study of Enablers for network Automation for 5G System (5GS); Phase 3 (Release 18). 3GPP TR 23.700-81 V0.4.0 (August 2022). 06 September 2022.<br>See section 6.28.1. | 1-15 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **02 February 2024** | **02 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/016744**

| Patent document cited in search report | | | Publication date (day/month/year) | Patent family member(s) | | | Publication date (day/month/year) |
|---|---|---|---|---|---|---|---|
| KR | 10-2022-0033384 | A | 16 March 2022 | None | | | |
| KR | 10-2405484 | B1 | 03 June 2022 | None | | | |
| KR | 10-2408756 | B1 | 15 June 2022 | CN | 113574358 | A | 29 October 2021 |
| | | | | CN | 113574358 | B | 20 September 2022 |
| | | | | JP | 6647473 | B1 | 14 February 2020 |
| | | | | WO | 2020-188696 | A1 | 24 September 2020 |
| US | 8565795 | B2 | 22 October 2013 | CN | 101686467 | A | 31 March 2010 |
| | | | | CN | 101686467 | B | 07 August 2013 |
| | | | | EP | 2320694 | A1 | 11 May 2011 |
| | | | | EP | 2320694 | B1 | 04 June 2014 |
| | | | | EP | 2739101 | A1 | 04 June 2014 |
| | | | | EP | 2739101 | B1 | 11 May 2016 |
| | | | | ES | 2490216 | T3 | 03 September 2014 |
| | | | | HU | E029302 | T2 | 28 February 2017 |
| | | | | US | 2011-0171987 | A1 | 14 July 2011 |
| | | | | US | 2012-0270556 | A1 | 25 October 2012 |
| | | | | US | 2014-0024407 | A1 | 23 January 2014 |
| | | | | US | 8271001 | B2 | 18 September 2012 |
| | | | | US | 8787958 | B2 | 22 July 2014 |
| | | | | WO | 2010-034230 | A1 | 01 April 2010 |

Form PCT/ISA/210 (patent family annex) (July 2022)